# EUROPÄISCHE PATENTANMELDUNG

(11) **EP 3 422 274 A1**
(43) Veröffentlichungstag der Anmeldung: **02.01.2019**
(21) Anmeldenummer: 17178636.1
(22) Anmeldetag: 29.06.2017
(51) Int. Cl.: G06Q 20/20, H04L 29/08, G06F 21/64

(54) **VERFAHREN ZUR KONFIGURATION ODER ÄNDERUNG EINER KONFIGURATION EINES BEZAHLTERMINALS UND/ODER ZUR ZUORDNUNG EINES BEZAHLTERMINALS ZU EINEM BETREIBER**

(71) Anmelder: Feig Electronic GmbH, 35781 Weilburg (DE)
(72) Erfinder: Jung, Michael, 60316 Frankfurt am Main (DE); Tschunko, Benjamin, 35396 Gießen (DE)
(74) Vertreter: Knefel, Cordula

(57) **Zusammenfassung**

Verfahren zur Konfiguration oder Änderung einer Konfiguration eines Bezahlterminals durch wenigstens einen Betreiber, bei dem eine Autorisierung des Betreibers durch das Bezahlterminal festgestellt wird, bei dem nach erfolgreicher Autorisierung des wenigstens einen Betreibers der wenigstens eine Betreiber die Konfiguration oder Änderung der Konfiguration durchführt, bei dem ein Identifikationsmerkmal zur Identifikation des wenigstens einen Betreibers in dem Bezahlterminal eingebracht wird, bei dem dieses Identifikationsmerkmal zur Autorisierung des wenigstens einen Betreibers verwendet wird. Verfahren zur Zuordnung eines Bezahlterminals zu einem Betreiber, bei dem das Bezahlterminal die Integrität des Identifikationsmerkmales des Betreibers zur Identifikation des Betreibers, dem das Bezahlterminal zugeordnet ist, überprüft.

## Beschreibung

Die Erfindung betrifft ein Verfahren zur Konfiguration oder Änderung einer Konfiguration eines Bezahlterminals und/oder zur Zuordnung eines Bezahlterminals zu einem Betreiber.

Betreiber von Systemen zur Abwicklung von bargeldlosen Bezahlvorgängen stellen Händlern Bezahlterminals zur Verfügung, die im Zusammenspiel mit weiteren Komponenten des Systems an der Verkaufsstelle die nachweisliche Autorisierung von Transaktionen durch Kunden ermöglichen.

Der Betreiber trägt Verantwortung, diese Bezahlterminals dahingehend zu konfigurieren, dass Betrug vermieden werden kann.

Eine aus der Praxis bekannte Methode, die sichere Zuordnung von Bezahlterminals zu Betreibern zu garantieren, basiert darauf, die Konfiguration des Bezahlterminals bereits in einer sicheren Umgebung beim Hersteller vorzunehmen. Beispielsweise werden die Bezahlapplikation und die zugehörigen kryptographischen Schlüssel vom Hersteller im Auftrag des Betreibers auf diese Weise eingebracht. Die Integrität der Daten wird in diesem Fall ausschließlich durch organisatorische Maßnahmen sichergestellt.

Eine weitere aus der Praxis bekannte Methode, um zu garantieren, dass nur vom Betreiber autorisierte Änderungen an der Konfiguration des Bezahlterminals möglich sind, basiert darauf, ein Merkmal zur Identifikation des Betreibers bereits in die Firmware des Bezahlterminals zu integrieren.

In einer Variante dieser Methode können hierbei öffentliche Schlüssel, zum Beispiel wie in RFC 8017 beschrieben, als Merkmal zur Identifikation des Betreibers verwendet werden.

In einer weiteren Variante dieser Methode werden betreiberspezifische öffentliche Schlüssel als Merkmal zur Identifikation in die Firmware eingebracht. Üblicherweise werden den unterschiedlichen konfigurierbaren Eigenschaften des Bezahlterminals, wie zum Beispiel einer Bezahlapplikation und kryptographischen Schlüsseln unterschiedliche öffentliche Schlüssel zugeordnet. Die öffentlichen Schlüssel in ihrer Gesamtheit stellen das Merkmal zur Identifikation des Betreibers dar.

Die entsprechenden geheimen Schlüssel, die nur dem Betreiber zugänglich sind, werden verwendet, um Konfigurationen der Bezahlterminals zu signieren. Das Bezahlterminal prüft die Autorisierung der Konfigurationen mittels der in die Firmware integrierten öffentlichen Schlüssel, bevor die Konfigurationsänderung vorgenommen wird.

In einer weiteren Variante wird eine betreiberspezifische Zeichenkette oder Nummer als Merkmal zur Identifikation in die Firmware eingebracht.

Der Hersteller des Bezahlterminals räumt dem Betreiber das Recht ein, Konfigurationsänderungen an Bezahlterminals vorzunehmen, die dem Betreiber über das Identifikationsmerkmal zugewiesen sind. Zu diesem Zweck stellt der Hersteller des Bezahlterminals Zertifikate aus, die das entsprechende Merkmal zur Identifikation des Betreibers aufweisen. Zudem enthalten die Zertifikate den öffentlichen Schlüssel des Betreibers und die Beschreibung des eingeräumten Rechtes, nämlich das Recht, bestimmte Eigenschaften der Konfiguration (zum Beispiel Applikationen, kryptographische Schlüssel oder Laufzeitparameter) des Bezahlterminals zu ändern.

Der entsprechende geheime Schlüssel, der nur dem Betreiber zugänglich ist, wird verwendet, um Konfigurationen der Bezahlterminals zu signieren. Das Bezahlterminal prüft die Autorisierung der Konfiguration wie folgt: Erstens wird die Signatur des Zertifikats mittels eines in der Firmware des Bezahlterminals integrierten öffentlichen Schlüssels des Herstellers geprüft. Zweitens wird geprüft, ob das Zertifikat das Recht einräumt, die Konfiguration eines Bezahlterminals mit dem entsprechenden Merkmal zur Identifikation des Betreibers zu ändern. Drittens wird die Signatur der Konfiguration mit dem öffentlichen Schlüssel des Zertifikats überprüft. Nur wenn alle drei Überprüfungen positiv abgeschlossen sind, wird die Konfigurationsänderung vorgenommen.

Das der Erfindung zugrunde liegende technische Problem besteht darin, ein Verfahren zur Konfiguration oder Änderung einer Konfiguration eines Bezahlterminals anzugeben, welches gewährleistet, dass eine Konfiguration oder eine Änderung einer Konfiguration des Bezahlterminals lediglich von autorisierten Personen oder Institutionen vorgenommen werden kann.

Dieses technische Problem wird durch ein Verfahren mit den Merkmalen gemäß Anspruch 1 oder durch ein Verfahren mit den Merkmalen gemäß Anspruch 4 gelöst.

Das erfindungsgemäße Verfahren zur Konfiguration oder Änderung einer Konfiguration eines Bezahlterminals, wobei die Konfiguration oder Änderung der Konfiguration durch wenigstens einen Betreiber durchgeführt wird, zeichnet sich dadurch aus, dass ein Identifikationsmerkmal zur Identifikation des wenigstens einen Betreibers nach der Herstellung und bis zur ersten Inbetriebnahme in das Bezahlterminal eingebracht wird, dass dieses Identifikationsmerkmal zur Autorisierung des wenigstens einen Betreibers verwendet wird, dass eine Autorisierung des wenigstens einen Betreibers durch das Bezahlterminal festgestellt wird, und dass nach erfolgreicher Autorisierung des wenigstens einen Betreibers der wenigstens eine Betreiber die Konfiguration oder Änderung der Konfiguration durchführt.

Gemäß der Erfindung wird das Identifikationsmerkmal in das Bezahlterminal bis zur ersten Inbetriebnahme des Bezahlterminals eingebracht. Dieser Vorgang wird auch Initialisierung genannt. Das Identifikationsmerkmal kann also zu einem beliebigen Zeitpunkt nach der Herstellung des Bezahlterminals und bis zur Inbetriebnahme des Bezahlterminals eingebracht werden. Das Identifikationsmerkmal muss nicht schon beim Hersteller eingebracht werden. Dies hat den Vorteil, dass beim Austausch oder der Ergänzung eines Bezahlterminals ein beliebiges uninitialisiertes Bezahlterminal verwendet werden kann, in welches das Identifikationsmerkmal nach Bedarf eingebracht wird.

Gemäß einer weiteren vorteilhaften Ausführungsform der Erfindung wird das Identifikationsmerkmal von dem Betreiber eingebracht. Dies hat den Vorteil, dass der Betreiber das Bezahlterminal derart initialisieren kann, dass kein bereits vom Hersteller initialisiertes Bezahlterminal verwendet werden muss, sondern der Betreiber das von ihm gewählte Identifikationsmerkmal in das Bezahlterminal einbringt und der Betreiber vom Hersteller ein beliebiges, universell einsetzbares Bezahlterminal beziehen kann.

Ein Verfahren zur Zuordnung eines Bezahlterminals zu wenigstens einem Betreiber zeichnet sich dadurch aus, dass das Bezahlterminal die Integrität des Identifikationsmerkmales des Betreibers zur Identifikation des Betreibers, dem das Bezahlterminal zugeordnet ist, überprüft, und dass das Bezahlterminal eine Änderung einer konfigurierbaren Eigenschaft lediglich durch den Betreiber zulässt, dem das Bezahlterminal zugeordnet ist. Der Begriff der Integrität ist hier im Sinne der Informationssicherheit zu verstehen, wobei eine nichtautorisierte Modifikation des Identifikationsmerkmals des Betreibers verhindert oder zumindest erkannt wird.

Gemäß einer vorteilhaften Ausführungsform der Erfindung weist das Bezahlterminal kryptographisch nach, welchem Betreiber das Bezahlterminal zugeordnet ist. Hierdurch ist gewährleistet, dass kein anderer Zugriff auf das Bezahlterminal erlangen kann. Ein unbefugter Dritter kann keine Änderung an der Konfiguration vornehmen.

Gemäß einer weiteren vorteilhaften Ausführungsform der Erfindung wird als Identifikationsmerkmal ein Datenelement verwendet, welches im Bezahlterminal gespeichert ist. Die Integrität dieses Datenelements muss geschützt sein, das heißt eine nichtautorisierte Veränderung muss verhindert oder zumindest erkannt werden. Es ist vorteilhaft vorgesehen, dass jeder Betreiber bei den ihm zugeordneten Bezahlterminals ein anderes Datenelement verwendet. Das heißt, die Eindeutigkeit des Datenelementes wird sichergestellt. Das bedeutet, unterschiedlichen Betreibern müssen unterschiedliche Datenelemente zugewiesen werden.

Eine weitere vorteilhafte Ausführungsform sieht vor, das bei der Konfiguration eine Bezahlapplikation eingebracht wird.

Gemäß einer weiteren vorteilhaften Ausführungsform wird die Bezahlapplikation in Form eines ausführbaren Programmcodes in das Bezahlterminal eingebracht. Hierdurch ist gewährleistet, dass Bezahlvorgänge durchgeführt werden können. Die Bezahlapplikation kann betreiberspezifisch ausgebildet sein.

Gemäß einer weiteren vorteilhaften Ausführungsform der Erfindung ist die Bezahlapplikation mit einem geheimen Schlüssel signiert. Hierdurch ist gewährleistet, dass ein Dritter keinen Zugriff auf die Bezahlapplikation erhält und diese nicht ändern oder konfigurieren kann.

Eine weitere vorteilhafte Ausführungsform der Erfindung sieht vor, dass ein öffentlicher Schlüssel dem Bezahlterminal bekannt ist und dass mit diesem öffentlichen Schlüssel ein Recht eingeräumt ist, Applikationen in das Bezahlterminal einzubringen und dass das Bezahlterminal vor dem Einbringen der Bezahlapplikation eine Prüfung der Autorisierung durchführt und/oder dass eine Manipulation der Applikation durch das Bezahlterminal geprüft wird.

Hierdurch ist gewährleistet, dass Dritte keinen Zugriff auf das Bezahlterminal erhalten und Applikationen in das Bezahlterminal einbringen können oder das Bezahlterminal manipulieren können.

Eine weitere vorteilhafte Ausführungsform der Erfindung sieht vor, dass bei der Konfiguration kryptographische Schlüssel konfiguriert werden. Kryptographische Schlüssel sind Schlüssel, deren Art und Anzahl spezifisch für die jeweilige Bezahlapplikation sind, um mit deren Hilfe Vertraulichkeit, Integrität, Authentifizierung und Autorisierung bei der Kommunikation zwischen der Bezahlapplikation und anderen Komponenten des Systems sicherzustellen.

Gemäß einer weiteren vorteilhaften Ausführungsform der Erfindung werden kryptographische Schlüssel von einer zentralen Stelle in das Bezahlterminal eingebracht. Solche zentralen Stellen werden von einer Zertifizierungsstelle mit entsprechenden Rechten ausgestattet.

Gemäß einer weiteren vorteilhaften Ausführungsform der Erfindung ist vorgesehen, dass die kryptographischen Schlüssel in einer sicheren Umgebung in das Bezahlterminal eingebracht werden oder dass bei der Übertragung die kryptographischen Schlüssel durch kryptographische Verfahren geschützt werden. Bei der ersten Variante, bei der die Schlüssel in einer sicheren Umgebung in das Bezahlterminal eingebracht werden, muss der Datenübertragungsweg nicht gesondert geschützt werden. Bei der zweiten Variante, bei der bei der Übertragung die kryptographischen Schlüssel durch kryptographische Verfahren geschützt werden, ist keine sichere Umgebung erforderlich. Es muss hierbei jedoch der Übertragungsweg geschützt sein.

Gemäß einer weiteren vorteilhaften Ausführungsform der Erfindung ist vorgesehen, dass bei einer symmetrischen Kryptografie zur Übertragung kryptographischer Schlüssel von dem Betreiber ein betreiberspezifischer Master-Schlüssel generiert wird, dass der Master-Schlüssel gespeichert wird, dass von dem Master-Schlüssel ein gerätespezifischer Master-Schlüssel mittels einer eindeutigen Kennung des Bezahlterminals für das Bezahlterminal abgeleitet wird, und dass der abgeleitete gerätespezifische Schlüssel in das Bezahlterminal eingebracht wird. Bei Verwendung von Verfahren der symmetrischen Kryptografie zur Übertragung kryptographischer Schlüssel erzeugt der Betreiber zunächst einen betreiberspezifischen Master-Schlüssel. Dieser Master-Schlüssel muss in einer Vorrichtung gespeichert werden, das die kryptographischen Schlüssel des Betreibers verteilt. Von diesem Master-Schlüssel wird ein gerätespezifischer Schlüssel mittels einer eindeutigen Kennung des Bezahlterminals, zum Bespiel der Seriennummer für das Bezahlterminal abgeleitet. Der abgeleitete gerätespezifische Schlüssel muss unter besonderen Sicherheitsvorkehrungen in das Bezahlterminal eingebracht werden, das die kryptographischen Schlüssel des Betreibers erhalten soll. Die Vorrichtung, die die kryptographischen Schlüssel des Betreibers verteilt, kann nun den gerätespezifischen Schlüssel für das Bezahlterminal ableiten und die kryptographischen Schlüssel mittels dieses gerätespezifischen Schlüssels chiffrieren. Dadurch sind die kryptographischen Schlüssel auf dem Übertragungsweg geschützt und können nur von dem Bezahlterminal dechiffriert werden, das den passenden gerätespezifischen Schlüssel besitzt. Durch dieses Verfahren ist das Einbringen von kryptographischen Schlüsseln auf die Bezahlterminals beschränkt, denen der Master-Schlüssel bekannt ist.

Gemäß einer weiteren vorteilhaften Ausführungsform der Erfindung ist vorgesehen, dass eine Vorrichtung, welche die kryptographischen Schlüssel eines Betreibers verteilt, den gerätespezifischen Schlüssel für das Bezahlterminal ableitet und die kryptographischen Schlüssel mittels dieses gerätespezifischen Schlüssels chiffriert, dass die chiffrierten kryptographischen Schlüssels in das Bezahlterminal eingebracht werden, dass anschließend die kryptographischen Schlüssel von dem Bezahlterminal dechiffriert werden mit dem gerätespezifischen Schlüssel.

Gemäß einer weiteren vorteilhaften Ausführungsform der Erfindung ist vorgesehen, dass bei einer asymmetrischen Kryptografie zur Übertragung kryptographischer Schlüssel in der Vorrichtung, die die Schlüssel des Betreibers verteilt, Schlüsselpaare vorhanden sind und ein entsprechendes Zertifikat, das den öffentlichen Schlüssel enthält, dass das Zertifikat in ein Bezahlterminal eingebracht wird, so dass das Bezahlterminal lediglich kryptographische Schlüssel annimmt, die durch die Vorrichtung des Betreibers autorisiert sind, dass anschließend die Vorrichtung des Betreibers kryptographische Schlüssel in das Bezahlterminal einbringt, wobei die kryptographischen Schlüssel mit dem öffentlichen Schlüssel des Bezahlterminals chiffriert und mit dem geheimen Schlüssel eines Schlüsselpaares signiert sind, dass die kryptographischen Schlüssel nach dem Einbringen in das Bezahlterminal von dem Bezahlterminal dechiffriert werden, das den entsprechenden geheimen Schlüssel besitzt und dass eine Autorisierungsprüfung mittels des öffentlichen Schlüssels durchgeführt wird, den die Vorrichtung des ersten Betreibers im ersten Schritt über das entsprechende Zertifikat eingebracht hat.

Bei Verwendung von Verfahren der asymmetrischen Kryptografie zur Übertragung kryptographischer Schlüssel kann die Bindung an einen Betreiber auch ohne besondere Sicherheitsvorkehrungen erfolgen. Eine mögliche Umsetzung für dieses Verfahren ist im ANSI Standard ASC X9 TR 34-2012 beschrieben. Nach diesem Verfahren besitzt jede Vorrichtung, die kryptographische Schlüssel des Betreibers verteilt, ein Schlüsselpaar und ein entsprechendes Zertifikat, das den öffentlichen Schlüssel enthält. Das Zertifikat wird in einem ersten Schritt in ein Bezahlterminal eingebracht. Damit nimmt das Bezahlterminal nur noch kryptographische Schlüssel an, die durch diese Vorrichtung des Betreibers autorisiert wurden. In den folgenden Schritten kann die Vorrichtung des Betreibers kryptographische Schlüssel in das Bezahlterminal einbringen, indem die Vorrichtung die kryptographischen Schlüssel mit dem öffentlichen Schlüssel des Bezahlterminals chiffriert und mit dem geheimen Schlüssel des eigenen Schlüsselpaares signiert. Dadurch können die kryptographischen Schlüssel nur von dem Bezahlterminal dechiffriert werden, das den entsprechenden geheimen Schlüssel besitzt. Die Autorisierungsprüfung erfolgt mittels des öffentlichen Schlüssels, den die Vorrichtung des Betreibers im ersten Schritt über das entsprechende Zertifikat eingebracht hat.

Gemäß einer weiteren vorteilhaften Ausführungsform der Erfindung ist vorgesehen, dass bei der Konfiguration Laufzeitparameter konfiguriert werden.

Gemäß einer besonders vorteilhaften Ausführungsform der Erfindung ist vorgesehen, dass Änderungen der Laufzeitparameter zur Konfiguration des Bezahlterminals lediglich nach erfolgreicher Autorisierung durch ein Terminal Management System erfolgen.

Hierbei muss sichergestellt werden, dass Manipulationen an den Laufzeitparametern auf dem Übertragungsweg zum Bezahlterminal erkannt werden. Verfügt das Terminal Management System über eine direkte Kommunikationsverbindung zum Bezahlterminal, so können die Kommunikationspartner beispielsweise eine verschlüsselte Kommunikationsverbindung (basierend auf dem Transport Layer Security-Protokoll) aufbauen. Im Rahmen des Verbindungsaufbaus authentifiziert sich das Terminal Management System mittels eines asymmetrischen Schlüsselpaares sowie des entsprechenden Zertifikates gegenüber dem Bezahlterminal, so dass dieses eine Autorisierungsprüfung durchführen kann. Um eine erfolgreiche Autorisierung durchführen zu können, muss das Zertifikat des Terminal Management Systems das Recht besitzen, die Laufzeitparameter des Bezahlterminals zu ändern. Nach erfolgreicher Autorisierung kann das Terminal Management System Änderungen der Laufzeitparameter vornehmen, wobei die Integrität der Daten über die verschlüsselte Kommunikationsverbindung sichergestellt werden kann.

Gemäß einer weiteren vorteilhaften Ausführungsform der Erfindung ist vorgesehen, dass das Terminal Management System ohne direkte Kommunikationsverbindung mit dem Bezahlterminal kommuniziert, und dass Änderungen von Laufzeitparametern mit signierten Datenpaketen und einer anschließenden Autorisierungsprüfung durchgeführt werden. Besteht keine direkte Kommunikationsverbindung zwischen dem Terminal Management System und dem Bezahlterminal, so kann die Änderung der Laufzeitparameter beispielsweise ähnlich wie beim Einbringen einer Applikation mit Hilfe signierter Datenpakete und entsprechender Autorisierungsprüfung erfolgen.

Gemäß einer weiteren vorteilhaften Ausführungsform der Erfindung ist vorgesehen, dass zur Freischaltung von optionalen Funktionen des Bezahlterminals der Betreiber eine Lizenz zum Freischalten bei dem Hersteller anfordert, dass die Lizenz zum Freischalten erteilt wird und dass der Betreiber die Funktion an wenigstens einem Bezahlterminal freischaltet.

Bei der Freischaltung von optionalen Funktionen des Bezahlterminals fordert der Betreiber eine Lizenz zum Betreiben der gewünschten Funktion beim Hersteller des Bezahlterminals an.

Gemäß einer vorteilhaften Weiterbildung der Erfindung erfolgt die Freischaltung in Form von Lizenzschlüsseln. Der Hersteller erteilt also eine Lizenz zum Freischalten der Funktion, beispielsweise in Form eines Lizenzschlüssels, mit dem der Betreiber die Funktion in einem oder mehreren Bezahlterminals aktivieren kann. Für den Hersteller des Bezahlterminals hat dies den Vorteil, dass dieser optionale Funktionen, beispielsweise erst nach Zahlung einer Lizenzgebühr freischalten kann.

Gemäß einer weiteren vorteilhaften Ausführungsform der Erfindung ist vorgesehen, dass bei der Konfiguration eine Hardwaretopologie konfiguriert wird.

Gemäß einer weiteren vorteilhaften Ausführungsform der Erfindung ist vorgesehen, dass zusätzliche Hardware mittels signierter Datenpakete aktiviert oder deaktiviert wird. Bei der Konfiguration der Hardwaretopologie zur Unterstützung von Erweiterungsmodulen kann der Betreiber zusätzliche Hardwarekomponenten an das Bezahlterminal anschließen und diese vom Bezahlterminal ansteuern. Erweiterungsmodule, die bereits vom Hersteller des Bezahlterminals zur Verfügung gestellt werden, können vom Betreiber beispielsweise mittels signierter Datenpakete aktiviert oder deaktiviert werden. Es ist jedoch auch denkbar, dass ein Erweiterungsmodul nicht vom Hersteller des Bezahlterminals zur Verfügung gestellt wird. In diesem Fall kann der Betreiber die Beschreibung dieser neuen Hardwarekomponente in Form einer Datenstruktur zur Verfügung stellen, die vom Bezahlterminal interpretiert werden kann. Diese kann bei LINUX-Systemen beispielsweise in Form des "Device Trees" erfolgen. Ist diese Datenstruktur zur Beschreibung der Hardwaretopologie zudem signiert, kann eine entsprechende Autorisierungsprüfung durch das Bezahlterminal erfolgen.

Um zu gewährleisten, dass lediglich der Betreiber oder eine autorisierte Institution eine Änderung der Konfiguration des Bezahlterminals durchführen kann, wird jede Änderung an der Konfiguration des Bezahlterminals durch den Betreiber autorisiert. Das Bezahlterminal nimmt besagte Konfigurationsänderung nur dann vor, wenn es deren Autorisierung durch den Betreiber überprüfen kann.

Eine solche Autorisierungsprüfung erfordert, dass ein Merkmal zur Identifikation des Betreibers in das Bezahlterminal eingebracht wurde.

Die Erfindung bezieht sich zum einen auf ein Verfahren zur sicheren Einbringung von Merkmalen zur Identifikation von Betreibern in Bezahlterminals, das folgenden Eigenschaften aufweist:
Die Eindeutigkeit der Merkmale zur Identifikation unterschiedlicher Betreiber wird sichergestellt.

Die Einbringung des Merkmals zur Identifikation eines Betreibers kann zu einem beliebigen Zeitpunkt zwischen der Produktion und der Inbetriebnahme des betroffenen Bezahlterminals erfolgen.

Es bestehen keine Sicherheitsanforderungen an den Prozess der Einbringung des Merkmals zur Identifikation eines Betreibers in ein Bezahlterminal. Insbesondere kann das Identifikationsmerkmal von anderen Parteien als dem Hersteller des Bezahlterminals eingebracht werden.

Zum anderen bezieht sich die Erfindung auf ein Verfahren zum Schutz und zum Nachweis der Zuordnung eines Bezahlterminals zu einem Betreiber, das folgende Eigenschaften aufweist:
- Bezahlterminals lassen Änderungen an jeder konfigurierbaren Eigenschaft nur durch den Betreiber zu, welchem sie zugeordnet sind.
- Bezahlterminals stellen die Integrität des Merkmals zur Identifikation des Betreibers, dem sie zugeordnet wurden, sicher.
- Bezahlterminals können kryptographisch gesichert nachweisen, welchem Betreiber sie zugeordnet sind.

Gemäß einer vorteilhaften Ausführungsform der Erfindung funktioniert der kryptograpische Nachweis, welchem Betreiber das Bezahlterminal zugeordnet ist wie folgt:
Als Teil des Produktionsprozesses erzeugt das Bezahlterminal ein zufälliges Schlüsselpaar zu diesem Zweck. In einer sicheren Umgebung wird dem Bezahlterminal vom Hersteller ein Zertifikat mit folgenden Attributen ausgestellt:
   - als Subjekt: Identifizierungsdaten des Bezahlterminals, zum Beispiel in Form der Seriennummer.
   - als Berechtigung: "Nachweis der Zuordnung zu einem Betreiber."
   - der öffentliche Schlüssel des oben genannten Schlüsselpaars.

Eine dritte Partei, die einen Nachweis der Betreiberzuordnung eines Bezahlterminals benötigt, erzeugt gemäß einer vorteilhaften Ausführungsform eine Zufallszahl und übermittelt diese als Teil der entsprechenden Anfrage an das Bezahlterminal. Das Bezahlterminal bildet ein Tuppel aus Zufallszahl und Betreibermerkmal und signiert dieses mit dem privaten Schlüssel. Das Bezahlterminal antwortet auf die Anfrage mit dem Betreibermerkmal, der Signatur und dem Zertifikat. Die dritte Partei prüft das Zertifikat, bildet dann das Tuppel aus Zufallszahl und Betreibermerkmal und prüft die Signatur dieses Tuppels mit dem öffentlichen Schlüssel aus dem Zertifikat. Im Erfolgsfall gilt als kryptographisch nachgewiesen, dass das Bezahlterminal, welches im Zertifikat als Subjekt vermerkt ist dem Betreiber mit dem entsprechenden Betreibermerkmal zugeordnet ist.

Unter einem Merkmal zur Identifikation des Betreibers wird im Sinne der Erfindung verstanden, dass das Merkmal zur Identifikation des Betreibers eines Bezahlterminals ein Datenelement ist, das im Bezahlterminal gespeichert ist. Die Integrität dieses Datenelements muss geschützt werden. Das heißt, nicht autorisierte Veränderung muss verhindert oder zumindest erkannt werden. Die Eindeutigkeit des Datenelements muss sichergestellt werden. Das heißt, unterschiedlichen Betreibern müssen unterschiedliche Datenelemente zugewiesen werden.

Beispiele für das Format des Datenelements sind:
- eine ASCII kodierte und Null-terminierte Zeichenkette (zum Beispiel "SuperPay GmbH"),
- eine Nummer (zum Beispiel "242"),
- ein oder mehrere öffentliche Schlüssel eines asymmetrischen Kryptoverfahrens.

Vorteilhaft umfasst die Konfiguration des Bezahlterminals, das unter Kontrolle des Betreibers steht, folgende Eigenschaften:
a) die Bezahlapplikation selbst (auch "Ablaufsteuerung"), welche üblicherweise in Form eines ausführbaren Programmcodes eingebracht wird und welche den konkreten Ablauf der Transaktionsautorisierung und die Integration mit anderen Komponenten des Systems implementiert,
b) kryptographische Schlüssel, deren Art und Anzahl spezifisch für die jeweilige Bezahlapplikation sind und mit deren Hilfe Vertraulichkeit, Integrität, Authentifizierung und Autorisierung bei der Kommunikation zwischen der Bezahlapplikation und anderen Komponenten des Systems sichergestellt werden,
c) Laufzeitparameter des Bezahlterminals, welche beispielsweise die lokale Uhrzeit, Netzwerkeinstellungen, EMV^{®} Parameter oder Parameter der Bezahlapplikation festlegen und in der Regel von einem Terminal Management System verwaltet werden,
d) die Lizensierung von optionalen Funktionen durch den Hersteller des Bezahlterminals, indem dieser einem Betreiber beispielsweise Lizenzen zum Freischalten von Funktionen (wie eines EMV^{®} Contactless C-3 Kernels) zur Verfügung stellt, durch die der Betreiber die entsprechenden Funktionen im Bezahlterminal aktivieren kann,
e) die Konfiguration der Hardwaretopologie zur Unterstützung von Erweiterungsmodulen zur Ansteuerung zusätzlicher Hardwarekomponenten.

Eine Verarbeitungseinheit für offene Zahlungssysteme funktioniert beispielsweise mittels zertifizierter Kernel, wie in den Dokumenten "EMV® Contactless Specifications for Payment Systems", Book A, Architecture and General Requirements, Version 2.6, March 2016, Book B, Entry Point Specification, Version 2.6, July 2016, Book C-1, Kernel 1 Specification, Version 2.6, February 2016, Book C-2, Kernel 2 Specification, Version 2.6, February 2016, Book C-2, Kernel 3 Specification, Version 2.6, February 2016, Book C-4, Kernel 4 Specification, Version 2.6, February 2016, Book C-5, Kernel 5 Specification, Version 2.6, February 2016, Book C-6, Kernel 6 Specification, Version 2.6, February 2016, Book C-7, Kernel 7 Specification, Version 2.6, February 2016, Book D, EMV® Contactless Communication Protocol Specification, Version 2.6, March 2016 (EMV^{®} - eingetragene Marke der EMV^{®} Co, LLC, USA) beschrieben.

In den erfindungsgemäßen Verfahren können asymmetrische Kryptographie-Verfahren und digitale Signaturen wie auch symmetrische Kryptographie-Verfahren verwendet werden.

Die asymmetrische Kryptographie zeichnet sich durch die Verwendung von Schlüsselpaaren aus, von denen jeweils ein Schlüssel öffentlich zugänglich gemacht wird, während der andere Schlüssel geheim und nur seinem Eigentümer bekannt ist. Informationen, die mit dem geheimen Schlüssel chiffriert werden, können nur mit dem öffentlichen Schlüssel dechiffriert werden.

Diese Eigenschaft wird zur Erstellung und Überprüfung digitaler Signaturen genutzt. Ein Dokument wird vom Eigentümer des geheimen Schlüssels signiert, indem eine kryptographische Prüfsumme des Dokuments mit dem geheimen Schlüssel chiffriert und die daraus resultierende Signatur an das Dokument angehängt wird.

Unter der Annahme, dass dem Empfänger des signierten Dokuments der öffentliche Schlüssel des Unterzeichners bekannt ist, kann dieser die Signatur prüfen, indem er die Signatur mit dem öffentlichen Schlüssel des Unterzeichners dechiffriert und das Resultat mit der kryptographischen Prüfsumme des Dokuments vergleicht. Stimmen diese überein und ist gegeben, dass der geheime Schlüssel tatsächlich nur dem Unterzeichner bekannt ist, so stammt diese Signatur zweifelsfrei vom Unterzeichner.

Beispiele für Verfahren der asymmetrischen Kryptographie sind das RSA-Verfahren und Elliptische-Kurven-Kryptographie mit ihren jeweiligen Signaturverfahren.

RSA (Rivest, Shamir und Adleman) ist ein asymmetrisches kryptographisches Verfahren, das sowohl zum Verschlüsseln als auch zum digitalen Signieren verwendet werden kann. Es verwendet ein Schlüsselpaar, bestehend aus einem privaten Schlüssel, der zum Entschlüsseln oder Signieren von Daten verwendet wird, und einem öffentlichen Schlüssel, mit dem man verschlüsselt oder Signaturen prüft. Der private Schlüssel wird geheim gehalten und kann nach heutigem Stand nur mit extrem hohem Aufwand aus dem öffentlichen Schlüssel berechnet werden.

Um eine digitale Signatur prüfen und den Unterzeichner authentifizieren zu können, müssen folgende Vorbedingungen gegeben sein:
Der öffentliche Schlüssel selbst muss bekannt sein.

Es muss bekannt sein, welchem Unterzeichner der öffentliche Schlüssel zuzuordnen ist. Das heißt welches Subjekt (zum Beispiel eine technische Einrichtung oder eine juristische oder natürliche Person) alleinigen Zugriff auf den entsprechenden geheimen Schlüssel hat.

Die Verknüpfung dieser beiden Informationen kann in einem digitalen Zertifikat festgehalten werden. Nach Prüfung der Korrektheit der Angaben wird das Zertifikat selbst von einer vertrauenswürdigen Zertifizierungsstelle digital signiert.

Über eine Indirektionsstufe kann der Empfänger eines digital signierten Dokuments die Signatur wie folgt prüfen, sofern ihm der öffentliche Schlüssel der Zertifizierungsstelle bekannt ist: Das Zertifikat des vermeintlichen Unterzeichners wird mit dem öffentlichen Schlüssel der Zertifizierungsstelle geprüft. Im Erfolgsfall wird nachfolgend mit dem öffentlichen Schlüssel aus dem Zertifikat die Signatur des Dokuments geprüft. Ist auch diese Überprüfung erfolgreich, so kann die Signatur dem im Zertifikat angegebenen Subjekt zugeordnet werden.

Der Vorteil, der sich aus dieser Indirektionsstufe ergibt, ist, dass dem Empfänger signierter Dokumente nur der öffentliche Schlüssel der Zertifizierungsstelle bekannt sein muss, um digitale Signaturen von allen Unterzeichnern prüfen zu können, für die diese Stelle Zertifikate ausgegeben hat.

Diese Kette kann weitergeführt werden, indem Zertifikate für vertrauenswürdige Zertifizierungsstellen ausgestellt werden. Diese Kette des Vertrauens endet schließlich bei einem Vertrauensanker, repräsentiert durch den öffentlichen Schlüssel dieser allen übergeordneten vertrauenswürdigen Zertifizierungsstelle. Eine solche Hierarchie aus Zertifizierungsstellen nennt man eine Public-Key-Infrastruktur.

Ein weit verbreitetes Format für digitale Zertifikate ist im ITU-T Standard X.509 definiert. Eine weit verbreitete Public-Key-Infrastructure ist die im IETF RFC 5280 definierte Internet PKI (Public Key Infrastructure) zur Authentifizierung von Kommunikationsteilnehmern im Internet.

Authentifizierung ist der Nachweis (Verifizierung) einer behaupteten Eigenschaft einer Entität, die beispielsweise ein Mensch, ein Gerät, ein Dokument oder eine Information sein kann, und die dabei durch ihren Beitrag ihre Authentisierung durchführt.

In der Informatik ist Authentifizierung entweder der Vorgang der Berechtigungssprüfung oder das Ergebnis dieser Überprüfung. Authentifizierung bedeutet die Prüfung der Echtheit. Der Begriff Authentifizierung wird auch für die Bezeugung der Echtheit verwendet.

Die Authentisierung einer Entität bezüglich der behaupteten Eigenschaft der Authentizität, die beispielsweise Einräumen einer "bestehenden Zugangsberechtigung" oder "Echtheit" sein kann, erlaubt der authentifizierten Entität weitere Aktionen. Die Entität gilt dann als authentisch.

Die eine Authentifizierung abschließende Bestätigung wird auch als Autorisierung bezeichnet, wenn sie durch bestimmte zulässige Modi und/oder in einem bestimmten Kontext eingeschränkt wird. Eine Authentifizierung gilt so lange, bis der betreffende Kontext verlassen oder verändert oder bis der betreffende Modus verlassen oder verändert wird.

Zusätzlich zur Authentifizierung werden digitale Zertifikate auch zur Autorisierung, das heißt zur Einräumung von Rechten an das betreffende Subjekt verwendet. Zu diesem Zweck wird eine Beschreibung der eingeräumten Rechte in einer innerhalb des jeweiligen Anwendungsbereichs (das heißt innerhalb der Gültigkeit der Public Key Infrastruktur) wohldefinierten Syntax im Zertifikat hinterlegt. Enthält das signierte Dokument beispielsweise eine Aufforderung zur Ausübung eines bestimmten Rechts, so wird anhand des Zertifikats überprüft, ob dem auffordernden Subjekt von der Zertifizierungsstelle das entsprechende Recht eingeräumt wurde.

Die Konfiguration eines Bezahlterminals umfasst unterschiedliche Eigenschaften eines Bezahlterminals, die durch den Betreiber geändert werden können.

Das Einbringen von Applikationen, welche üblicherweise in Form eines ausführbaren Programmcodes vorliegen, darf nur nach erfolgreicher Autorisierung erfolgen. Zudem muss eine Manipulation der Applikation auf dem Übertragungsweg zum Bezahlterminal erkannt werden. Dies kann beispielsweise dadurch sichergestellt werden, dass die Applikationen mit einem geheimen Schlüssel signiert werden. Ist der entsprechende öffentliche Schlüssel dem Bezahlterminal bekannt und wurde diesem Schlüssel das Recht eingeräumt, Applikationen in das Bezahlterminal einzubringen, so kann das Bezahlterminal vor dem Einbringen der Applikation eine Autorisierungsprüfung durchführen. Zudem kann mit diesem Verfahren eine Manipulation der Applikation durch Dritte erkannt werden.

Die Verteilung von kryptographischen Schlüsseln für die jeweilige Bezahlapplikation kann über unterschiedliche Wege erfolgen. Da das Einbringen von kryptographischen Schlüsseln durch einen Servicemitarbeiter teuer und fehleranfällig ist, werden kryptographische Schlüssel von einer zentralen Stelle aus an Bezahlterminals verteilt. Dazu müssen die kryptographischen Schlüssel entweder in einer sicheren Umgebung in das Bezahlterminal eingebracht oder auf dem Übertragungsweg durch geeignete kryptographische Verfahren geschützt werden, damit diese Dritten nicht bekannt werden.

Bei Verwendung von Verfahren der symmetrischen Kryptographie zur Übertragung kryptographischer Schlüssel erzeugt der Betreiber zunächst einen betreiberspezifischen Master-Schlüssel. Dieser Master-Schlüssel muss in einer Vorrichtung gespeichert werden, die die kryptographischen Schlüssel des Betreibers verteilt. Von diesem Master-Schlüssel wird ein gerätespezifischer Schlüssel mittels einer eindeutigen Kennung des Bezahlterminals (zum Beispiel der Seriennummer) für das Bezahlterminal abgeleitet. Der abgeleitete gerätespezifische Schlüssel muss unter besonderen Sicherheitsvorkehrungen in das Bezahlterminal eingebracht werden, das die kryptographischen Schlüssel des Betreibers erhalten sollen. Die Vorrichtung, die die kryptographischen Schlüssel des Betreibers verteilt, kann nun den gerätespezifischen Schlüssel für das Bezahlterminal ableiten und die kryptographischen Schlüssel mittels dieses gerätespezifischen Schlüssels chiffrieren. Dadurch sind die kryptographischen Schlüssel auf dem Übertragungsweg geschützt und können nur von dem Bezahlterminal dechiffriert werden, das den passenden gerätespezifischen Schlüssel besitzt. Durch dieses Verfahren ist das Einbringen von kryptographischen Schlüsseln auf den Betreiber beschränkt, dem der Master-Schlüssel bekannt ist.

Bei der Freischaltung von optionalen Funktionen des Bezahlterminals fordert der Betreiber vorteilhaft eine Lizenz zum Freischalten der gewünschten Funktion beim Hersteller des Bezahlterminals an. Dieser erteilt eine Lizenz zum Freischalten der Funktion, beispielsweise in Form eines Lizenzschlüssels, mit dem der Betreiber die Funktion in einem oder mehreren Bezahlterminals aktivieren kann. Für den Hersteller des Bezahlterminals hat dies den Vorteil, dass dieser optionale Funktionen beispielsweise erst nach Zahlung einer Lizenzgebühr freischalten kann.

Die Erfindung stellt ein Verfahren zur Zuordnung von Bezahlterminals zu einem Betreiber mittels eines Merkmals zur Identifikation unterschiedlicher Betreiber unter Schutz. Das Verfahren stellt keine Sicherheitsanforderungen an den Prozess der Einbringung, so dass dies von anderen vertrauenswürdigen Stellen als dem Hersteller bis zum Zeitpunkt der Inbetriebnahme erfolgen kann.

Die Merkmale zur Identifikation der unterschiedlichen Betreiber werden von einer zentralen und vertrauenswürdigen Zertifizierungsstelle (zum Beispiel dem Hersteller des Terminals) verwaltet, die den so genannten Vertrauensanker darstellt. Diese Stelle teilt jedem Betreiber ein individuelles Merkmal zu. Dieses Merkmal zur Identifikation des Betreibers ist als Erweiterung in einem digitalen Zertifikat hinterlegt, das von der Zertifizierungsstelle signiert wird. Der Betreiber ist Eigentümer des geheimen Schlüssels, dessen öffentlicher Schlüssel im digitalen Zertifikat enthalten ist, so dass dieser sich als Inhaber des Merkmals zur Identifikation mittels des geheimen Schlüssels authentifizieren kann. Somit autorisiert die vertrauenswürdige Zertifizierungsstelle einen Betreiber, Änderungen an der Konfiguration eines Bezahlterminals vorzunehmen, und stellt gleichzeitig sicher, dass kein anderer Betreiber daraufhin Änderungen an der Konfiguration des Bezahlterminals vornehmen kann. Zudem ist die Beschreibung des eingeräumten Rechtes zur Änderung bestimmter Eigenschaften der Konfiguration (zum Beispiel Applikationen, kryptographische Schlüssel oder Laufzeitparameter) in einem Zertifikat hinterlegt, so dass der Betreiber unterschiedliche Schlüssel für unterschiedliche konfigurierbare Eigenschaften verwenden kann.

Die vertrauenswürdige Zertifizierungsstelle kann auch weitere Zertifizierungsstellen betreiben und autorisieren, um Rechte zur Änderungen einzelner konfigurierbarer Eigenschaften getrennt zu verwalten.

In einer weiteren Ausführungsform der Erfindung lassen sich Indirektionsstufen einführen, indem die vertrauenswürdige Zertifizierungsstelle weitere vertrauenswürdige Stellen (zum Beispiel Systemintegratoren) autorisiert, eine Teilmenge von Merkmalen zur Identifikation der unterschiedlichen Betreiber zu verwalten. Diese wiederum können weitere vertrauenswürdige Stellen autorisieren, eine Untermenge ihrer Teilmenge von Merkmalen zu verwalten, so dass eine hierarchische Baumstruktur entsteht. Um diese Struktur in dem Merkmal zur Identifikation unterschiedlicher Betreiber abzubilden, kann beispielsweise das Format eines Object Identifiers (4.36.13) verwendet werden. Dabei beschreibt die erste Nummer die vertrauenswürdige Zertifizierungsstelle. Die zweite Nummer beschreibt die darunter liegende autorisierte Stelle (zum Beispiel den Systemintegrator) und wird von der vertrauenswürdigen Zertifizierungsstelle verwaltet. Die letzte Ziffer beschreibt den Betreiber und wird von der darüber liegenden autorisierten Stelle (zum Beispiel dem Systemintegrator) verwaltet.

Die vertrauenswürdige Zertifizierungsstelle kann den autorisierten Stellen (zum Beispiel den Systemintegratoren) auch ermöglichen, mehrere eigene Stellen zu betreiben, bei denen jede dieser vertrauenswürdigen Stellen wiederum Rechte zur Änderungen unterschiedlicher konfigurierbarer Eigenschaften verwaltet. So beinhaltet das Zertifikat dieser vertrauenswürdigen Stellen neben den Merkmalen zur Identifikation des Betreibers auch die eingeräumten Rechte (zum Beispiel zum Einbringen von Applikationen oder kryptographischen Schlüsseln), die diese Stelle verwaltet.

Um das Einbringen des Merkmals zur Identifikation unterschiedlicher Betreiber von einer vertrauenswürdigen Zertifizierungsstelle sicherzustellen, muss ein Vertrauensanker, repräsentiert durch den öffentlichen Schlüssel der Zertifizierungsstelle, in dem Bezahlterminal vorhanden sein, der beispielsweise im Rahmen der Produktion durch den Hersteller des Bezahlterminals eingebracht wird. Nach dem Einbringen des Vertrauensankers kann die Einbringung des Merkmals zur Identifikation des Betreibers im Rahmen der Inbetriebnahme erfolgen, wobei das Bezahlterminal die Kette des Vertrauens von dem Zertifikat, das das Merkmals zur Identifikation des Betreibers enthält, bis zum Vertrauensanker prüfen muss. Dazu muss dem Bezahlterminal zum Zeitpunkt der Einbringung des Merkmals zur Identifikation des Betreibers die vollständige Zertifikatskette bis zum Vertrauensanker vorliegen. Dadurch kann das Bezahlterminal sicherstellen, dass das Merkmal von der vertrauenswürdigen Zertifizierungsstelle vergeben wurde, einen autorisierten Betreiber identifiziert und auf dem Weg zum Bezahlterminal nicht manipuliert wurde. Nach der Einbringung des Merkmals wird dieses dauerhaft als Kennung des autorisierten Betreibers gespeichert, wodurch das Bezahlterminal dem Betreiber zugeordnet ist.

In einer weiteren Ausführungsform der Erfindung lässt sich der Vertrauensanker auch im Rahmen der Inbetriebnahme gemeinsam mit dem Merkmal zur Identifikation des Betreibers in das Bezahlterminal einbringen. Der Vertrauensanker, repräsentiert durch den öffentlichen Schlüssel der Zertifizierungsstelle, kann beim Einbringen des Merkmals zur Identifikation des Betreibers neben der Zertifikatskette beispielsweise in Form eines Zertifikats mitgeliefert werden. In diesem Fall speichert das Bezahlterminal das Zertifikat oder den öffentlichen Schlüssel der vertrauenswürdigen Zertifizierungsstelle dauerhaft als Vertrauensanker und verwendet diese für alle weiteren Autorisierungsprüfungen.

Da das Merkmal zur Identifikation unterschiedlicher Betreiber bereits kryptographisch über die digitale Signatur des Zertifikats gegen Manipulation geschützt wird, müssen keine zusätzlichen Sicherheitsanforderungen an den Prozess der Einbringung gestellt werden.

Um die Konfiguration des Bezahlterminals vor Manipulation zu schützen, sind Verfahren erforderlich, die das Einbringen dieser Daten ausschließlich durch einen autorisierten Betreiber zulassen. Zudem soll verhindert werden, dass unterschiedliche Betreiber Änderungen an den verschiedenen konfigurierbaren Eigenschaften des Bezahlterminals (zum Beispiel Einbringung von Applikationen, kryptographischen Schlüsseln oder Änderung von Laufzeitparameter) vornehmen können. Dies wird durch Einbringen des Merkmals zur Identifikation eines Betreibers erreicht, indem jegliche Änderung einer konfigurierbaren Eigenschaft des Bezahlterminals ausschließlich durch einen Betreiber zugelassen wird, sobald das Bezahlterminal diesem Betreiber über das Merkmal zur Identifikation zugeordnet ist. Dieser Betreiber muss sich bei jeder nachfolgenden Konfigurationsänderung des Bezahlterminals als Eigentümer dieses Merkmals gegenüber dem Bezahlterminal authentifizieren. Änderungen der Konfiguration durch andere Betreiber werden von dem Bezahlterminal aufgrund fehlender Autorisierung abgelehnt.

Bei diesem Verfahren erfolgt die Bindung des Bezahlterminals an einen Betreiber, repräsentiert durch das Betreibermerkmal. Im Gegensatz dazu erfolgt die Bindung des Bezahlterminals in dem in ANSI Standard ASC X9 TR 34-2012 beschriebenen Verfahren zum Einbringen von kryptographischen Schlüsseln an eine einzelne Vorrichtung des Betreibers, das kryptographische Schlüssel verteilt. Fällt diese Vorrichtung aus, so muss das Bezahlterminal an eine andere Vorrichtung des Betreibers gebunden werden. Das hier beschriebene Verfahren bietet den Vorteil, dass die vertrauenswürdige Zertifizierungsstelle beim Ausfall einer Vorrichtung eine weitere Vorrichtung des Betreibers autorisieren kann, ohne dass eine Änderung des Bezahlterminals erforderlich ist. Zudem kann der Betreiber beispielsweise mehrere Vorrichtungen zur Verteilung von kryptographischen Schlüsseln an unterschiedlichen Standorten betreiben.

Ein weiterer Vorteil der Erfindung besteht darin, dass jede Änderung einer konfigurierbaren Eigenschaft eine Autorisierung des Betreibers erfordert, die eine Prüfung des Betreibermerkmals beinhaltet. Dadurch kann verhindert werden, dass ein Betreiber A beispielsweise die Bezahlapplikation und ein anderer Betreiber B die kryptographischen Schlüssel einbringt.

In einer weiteren vorteilhaften Ausführungsform der Erfindung lässt sich das Merkmal zur Identifikation des Betreibers gemeinsam mit der initialen Konfiguration des Bezahlterminals einbringen. In diesem Fall wird neben der initialen Konfiguration des Bezahlterminals auch das Zertifikat, das das Merkmal zur Identifikation des Betreibers enthält, sowie die Zertifikatskette bis zum Vertrauensanker mitgeliefert. Das Bezahlterminal bringt zuerst das Merkmal zur Identifikation des Betreibers unter Berücksichtigung aller Autorisierungsprüfungen ein und ist daraufhin dem entsprechenden Betreiber zugeordnet. Anschließend führt das Bezahlterminal die Konfiguration unter Berücksichtigung der entsprechenden Autorisierungsprüfungen durch. Dies ermöglicht es dem Betreiber, das Merkmal in bereits vorhandenen Prozessen, wie beispielsweise dem initialen Einbringen der Bezahlapplikation oder kryptographischer Schlüssel zu integrieren.

Weitere Merkmale und Vorteile der Erfindung ergeben sich anhand der zugehörigen Zeichnungen, in denen verschiedene Ausführungsformen einer erfindungsgemäßen Konfiguration nur beispielhaft dargestellt sind, ohne die Erfindung auf diese Ausführungsbeispiele zu beschränken. In den Zeichnungen zeigen:
- Fig. 1: eine Übersicht über eine Struktur digitaler Zertifikate und Public-Key-Infrastukturen;
- Fig. 2: eine Darstellung eines Zertifikates;
- Fig. 3: eine Übersicht zur Verwaltung eines Merkmals zur Identifikation unterschiedlicher Betreiber;
- Fig. 4: eine Übersicht über verschiedene Zertifizierungsstellen;
- Fig. 5: ein Ablaufdiagramm zur Einbringung eines Betreibermerkmales.

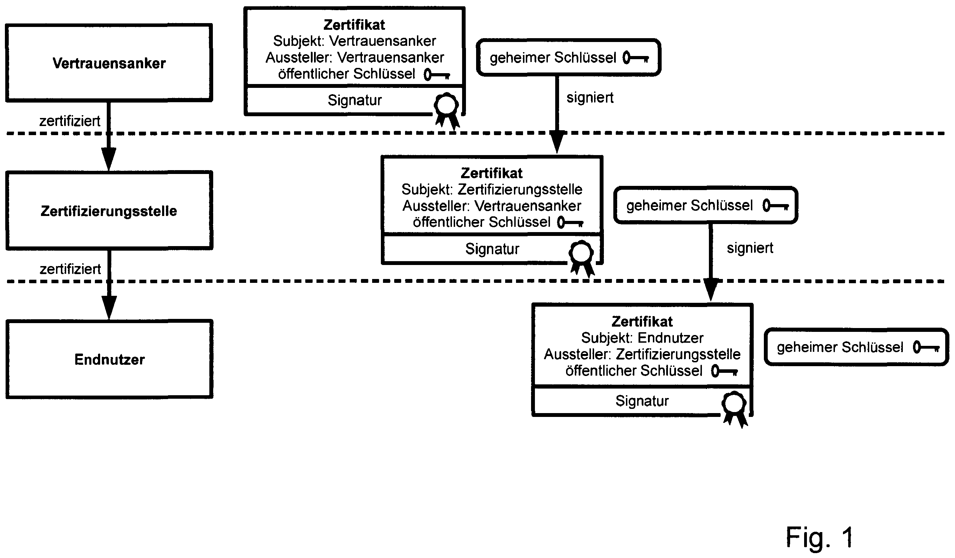

Fig. 1 zeigt die Verwendung digitaler Zertifikate und Public-Key-Infrastrukturen. Um eine digitale Signatur prüfen und den Unterzeichner authentifizieren zu können, müssen folgende Vorbedingungen gegeben sein:
Der öffentliche Schlüssel selbst muss bekannt sein.

Es muss bekannt sein, welchem Unterzeichner der öffentliche Schlüssel zuzuordnen ist. Das heißt, welches Subjekt (zum Beispiel eine technische Einrichtung oder eine juristische oder natürliche Person) alleinigen Zugriff auf den entsprechenden geheimen Schlüssel hat.

Die Verknüpfung dieser beiden Informationen kann in einem digitalen Zertifikat festgehalten werden. Nach Prüfung der Korrektheit der Angaben wird das Zertifikat selbst von einer vertrauenswürdigen Zertifizierungsstelle digital signiert.

Über eine Indirektionsstufe kann der Empfänger eines digital signierten Dokuments die Signatur wie folgt prüfen, sofern ihm der öffentliche Schlüssel der Zertifizierungsstelle bekannt ist: Das Zertifikat des vermeintlichen Unterzeichners wird mit dem öffentlichen Schlüssel der Zertifizierungsstelle geprüft. Im Erfolgsfall wird nachfolgend mit dem öffentlichen Schlüssel aus dem Zertifikat die Signatur des Dokuments geprüft. Ist auch diese Überprüfung erfolgreich, so kann die Signatur dem im Zertifikat angegebenen Subjekt zugeordnet werden.

Der Vorteil, der sich aus dieser Indirektionsstufe ergibt, ist, dass dem Empfänger signierter Dokumente nur der öffentliche Schlüssel der Zertifizierungsstelle bekannt sein muss, um digitale Signaturen von allen Unterzeichnern prüfen zu können, für die diese Stelle Zertifikate ausgegeben hat.

Diese Kette kann weitergeführt werden, indem Zertifikate für vertrauenswürdige Zertifizierungsstellen ausgestellt werden. Diese Kette des Vertrauens endet schließlich bei einem Vertrauensanker, repräsentiert durch den öffentlichen Schlüssel dieser allen übergeordneten vertrauenswürdigen Zertifizierungsstelle. Eine solche Hierarchie aus Zertifizierungsstellen nennt man eine Public-Key-Infrastruktur.

Ein weit verbreitetes Format für digitale Zertifikate ist im ITU-T Standard X.509 definiert. Eine weit verbreitete Public-Key-Infrastruktur (PKI) ist die im IETF RFC 5280 definierte Internet PKI zur Authentifizierung von Kommunikationsteilnehmern im Internet.

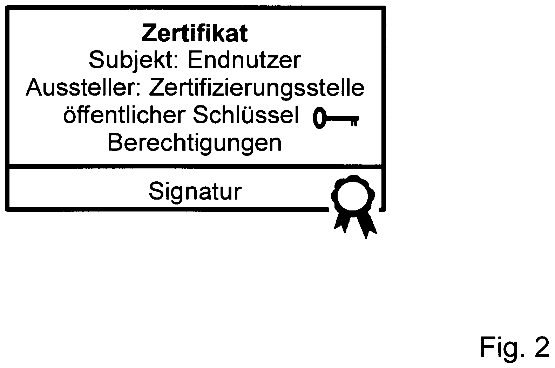

Wie in Fig. 2 dargestellt, können digitale Zertifikate zusätzlich zur Authentifizierung auch zur Autorisierung, das heißt zur Einräumung von Rechten an das betreffende Subjekt verwendet werden. Zu diesem Zweck wird eine Beschreibung der eingeräumten Rechte in einer innerhalb des jeweiligen Anwendungsbereichs (das heißt innerhalb der Gültigkeit der Public-Key-Infrastruktur) wohldefinierten Syntax im Zertifikat hinterlegt. Enthält das signierte Dokument beispielsweise eine Aufforderung zur Ausübung eines bestimmten Rechts, so wird anhand des Zertifikats überprüft, ob dem auffordernden Subjekt von der Zertifizierungsstelle das entsprechende Recht eingeräumt wurde.

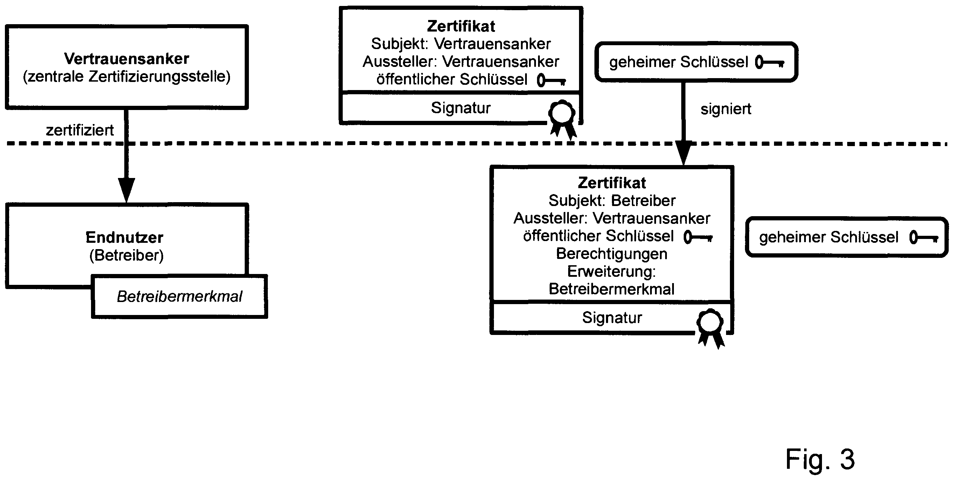

Fig. 3 zeigt die Verwaltung eines Merkmals zur Identifikation unterschiedlicher Betreiber.

Die Merkmale zur Identifikation der unterschiedlichen Betreiber werden von einer zentralen und vertrauenswürdigen Zertifizierungsstelle (zum Beispiel dem Hersteller des Terminals) verwaltet, die den sogenannten Vertrauensanker darstellt. Diese Stelle teilt jedem Betreiber ein individuelles Merkmal zu. Dieses Merkmal zur Identifikation des Betreibers ist als Erweiterung in einem digitalen Zertifikat hinterlegt, das von der Zertifizierungsstelle signiert wird. Der Betreiber ist Eigentümer des geheimen Schlüssels, dessen öffentlicher Schlüssel im digitalen Zertifikat enthalten ist, so dass dieser sich als Inhaber des Merkmals zur Identifikation mittels des geheimen Schlüssels authentifizieren kann. Somit autorisiert die vertrauenswürdige Zertifizierungsstelle einen Betreiber, Änderungen an der Konfiguration eines Bezahlterminals vorzunehmen, und stellt gleichzeitig sicher, dass kein anderer Betreiber daraufhin Änderungen an der Konfiguration des Bezahlterminals vornehmen kann. Zudem ist die Beschreibung des eingeräumten Rechtes zur Änderung bestimmter Eigenschaften der Konfiguration (zum Beispiel Applikationen, kryptographische Schlüssel oder Laufzeitparameter) in einem Zertifikat hinterlegt, so dass der Betreiber unterschiedliche Schlüssel für unterschiedliche konfigurierbare Eigenschaften verwenden kann.

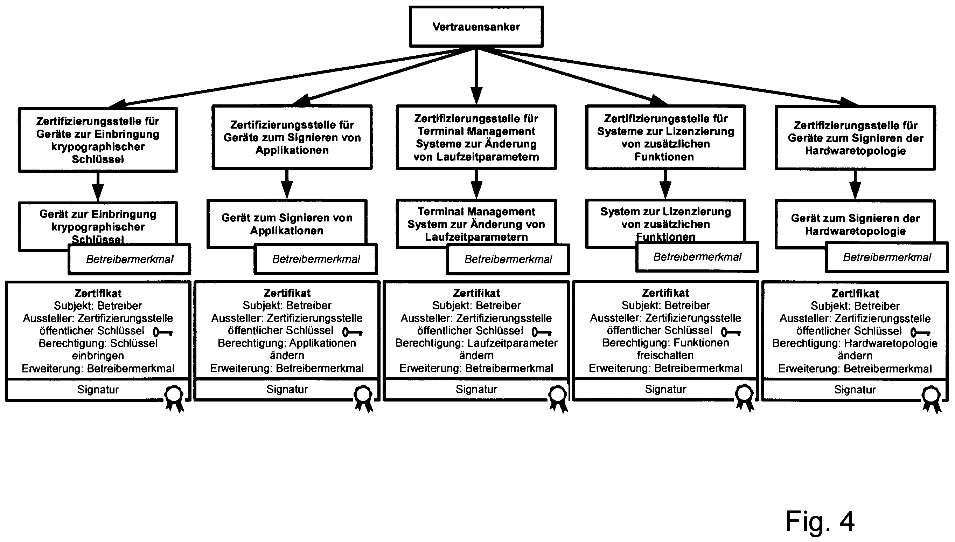

Fig. 4 zeigt eine weitere Ausführungsform der Erfindung.

Die vertrauenswürdige Zertifizierungsstelle kann auch weitere Zertifizierungsstellen betreiben und autorisieren, um Rechte zur Änderungen einzelner konfigurierbarer Eigenschaften getrennt zu verwalten.

In einer weiteren Ausführungsform der Erfindung lassen sich Indirektionsstufen einführen, indem die vertrauenswürdige Zertifizierungsstelle weitere vertrauenswürdige Stellen (zum Beispiel Systemintegratoren) autorisiert, eine Teilmenge von Merkmalen zur Identifikation der unterschiedlichen Betreiber zu verwalten. Diese wiederum können weitere vertrauenswürdige Stellen autorisieren, eine Untermenge ihrer Teilmenge von Merkmalen zu verwalten, so dass eine hierarchische Baumstruktur entsteht. Um diese Struktur in dem Merkmal zur Identifikation unterschiedlicher Betreiber abzubilden, kann beispielsweise das Format eines Object Identifiers (4.36.13) verwendet werden. Dabei beschreibt die erste Nummer die vertrauenswürdige Zertifizierungsstelle. Die zweite Nummer beschreibt die darunter liegende autorisierte Stelle (zum Beispiel den Systemintegrator) und wird von der vertrauenswürdigen Zertifizierungsstelle verwaltet. Die letzte Ziffer beschreibt den Betreiber und wird von der darüber liegenden autorisierten Stelle (zum Beispiel dem Systemintegrator) verwaltet.

Die vertrauenswürdige Zertifizierungsstelle kann den autorisierten Stellen (zum Beispiel den Systemintegratoren) auch ermöglichen, mehrere eigene Stellen zu betreiben, bei denen jede dieser vertrauenswürdigen Stellen wiederum Rechte zum Ändern unterschiedlicher konfigurierbarer Eigenschaften verwaltet. So beinhaltet das Zertifikat dieser vertrauenswürdigen Stellen neben den Merkmalen zur Identifikation des Betreibers auch die eingeräumten Rechte (zum Beispiel zum Einbringen von Applikationen oder kryptographischen Schlüsseln), die diese Stelle verwaltet.

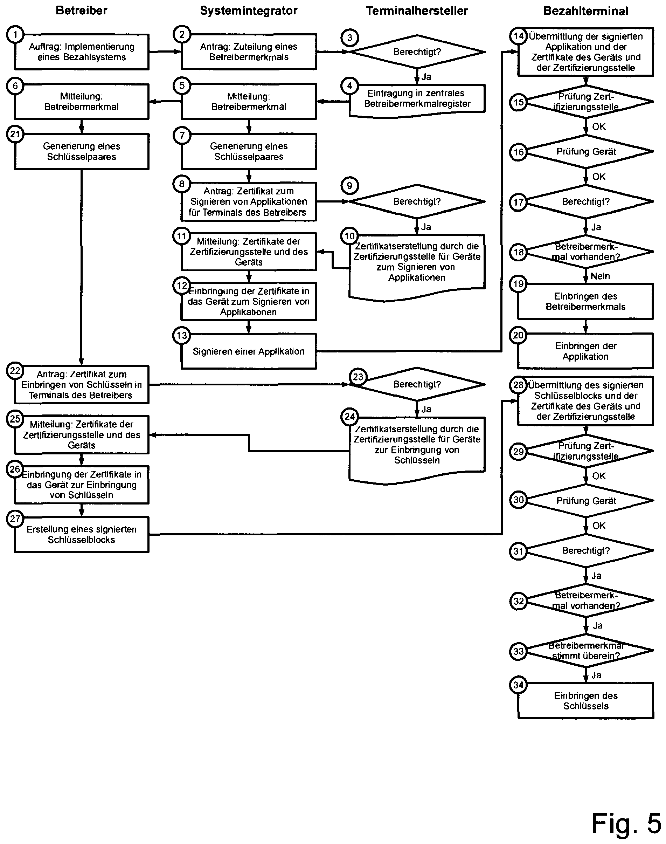

Fig. 5 zeigt ein Beispiel, in welchem ein Bezahlterminal zum Zeitpunkt der Inbetriebnahme einem Betreiber zugeordnet wird.

Beteiligte in diesem Beispiel sind der Betreiber eines Systems zur Abwicklung von bargeldlosen Bezahlvorgängen (im folgenden kurz Bezahlsystem genannt), ein Systemintegrator, der das Bezahlsystem im Auftrag des Betreibers implementiert, der Terminalhersteller, der Bezahlterminals an den Systemintegrator liefert, und ein solches Bezahlterminal.

Der Betreiber beauftragt den Systemintegrator mit der Implementierung eines Bezahlsystems, welches zukünftig von besagtem Betreiber betrieben werden soll.

Der Systemintegrator entscheidet sich, bei der Implementierung des Bezahlsystems Bezahlterminals des Terminalherstellers zu integrieren. Er beantragt beim Terminalhersteller ein neues Betreibermerkmal für den Betreiber.

Der Terminalhersteller überprüft durch telefonische Rücksprache mit dem Betreiber, ob der Systemintegrator berechtigt ist, im Namen des Betreibers ein Betreibermerkmal anzufordern. Gemäß dem vorliegenden Beispiel ist dies der Fall.

Der Terminalhersteller generiert ein neues eindeutiges Betreibermerkmal und trägt dieses zusammen mit den Kontaktdaten des Betreibers und des Systemintegrators in ein zentral geführtes Register von zugeteilten Betreibermerkmalen ein.

Der Terminalhersteller teilt das zugeteilte Betreibermerkmal dem Systemintegrator mit.

Der Systemintegrator teilt das Betreibermerkmal dem Betreiber mit.

Der Systemintegrator erzeugt in einer sicheren Vorrichtung zum Signieren von Applikationen ein Schlüsselpaar und exportiert den öffentlichen Schlüssel.

Der Systemintegrator beantragt beim Terminalhersteller die Ausstellung eines Zertifikats mit folgenden Attributen:
- als Subjekt: Identifizierungsdaten des Systemintegrators;
- als Berechtigung: "Applikationen ändern";
- das zugeteilte Betreibermerkmal;
- der besagte öffentliche Schlüssel der Vorrichtung zum Signieren von Applikationen.

Der Terminalhersteller überprüft durch telefonische Rücksprache mit dem Betreiber, ob der Systemintegrator berechtigt werden soll, auf Bezahlterminals des Betreibers Applikationen einzubringen. In dem vorliegenden Beispiel ist dies der Fall.

In seiner Rolle als Zertifizierungsstelle für Vorrichtungen zum Signieren von Applikationen stellt der Terminalhersteller das beantragte Zertifikat mit folgenden Attributen aus:
- als Herausgeber: Identifizierungsdaten der Zertifizierungsstelle;
- als Subjekt: Identifizierungsdaten des Systemintegrators;
- als Berechtigung: "Applikationen ändern";
- das Betreibermerkmal des Betreibers;
- der öffentliche Schlüssel der Vorrichtung zum Signieren von Applikationen;
- eine Signatur über die genannten Attribute, die mittels des privaten Schlüssels der Zertifizierungsstelle erstellt wurde.

Das ausgestellte Zertifikat sowie das Zertifikat der Zertifizierungsstelle für Vorrichtungen zum Signieren von Applikationen werden vom Terminalhersteller an den Systemintegrator übergeben.

Der Systemintegrator importiert die beiden Zertifikate in die Vorrichtung zum Signieren von Applikationen.

Der Systemintegrator signiert die Bezahlapplikation, die zur Implementierung des Bezahlsystems auf den Bezahlterminals installiert werden soll, mit der Vorrichtung zum Signieren von Applikationen.

In diesem Beispiel hat der Systemintegrator einen Bestand von fabrikneuen Bezahlterminals des Terminalherstellers in seinem Lager. Er entnimmt ein Bezahlterminal aus dem Lager, integriert es in das Bezahlsystem und importiert folgende Dateien:
- das Zertifikat der Zertifizierungsstelle für Vorrichtungen zum Signieren von Applikationen;
- das Zertifikat der Vorrichtung zum Signieren von Applikationen;
- die signierte Applikation.

Das Bezahlterminal startet den Prozess zum Einbringen oder Aktualisieren von Applikationen. Zunächst prüft es die Signatur des Zertifikats der Zertifizierungsstelle mit dem öffentlichen Schlüssel des Vertrauensankers, der integritätsgeschützt im Bezahlterminal vorliegt. Im vorliegenden Beispiel ist diese Prüfung erfolgreich.

Das Bezahlterminal prüft die Signatur des Zertifikats der Vorrichtung zum Signieren von Applikationen mit dem öffentlichen Schlüssel aus dem Zertifikat der Zertifizierungsstelle. Im vorliegenden Beispiel ist diese Prüfung erfolgreich.

Das Bezahlterminal prüft, ob das Zertifikat der Vorrichtung zum Signieren von Applikationen die Berechtigung "Applikationen ändern" aufweist. Im vorliegenden Beispiel ist diese Prüfung erfolgreich.

Das Bezahlterminal prüft, ob es bereits an einen Betreiber gebunden ist. Das heißt, ob bereits ein Betreibermerkmal eingebracht wurde. Da es sich um ein fabrikneues Bezahlterminal handelt, ist dies im vorliegenden Beispiel nicht der Fall.

Das Bezahlterminal extrahiert das Betreibermerkmal aus dem Zertifikat der Vorrichtung zum Signieren von Applikationen und bringt dieses in einen integritätsgeschützten nicht-flüchtigen Speicher ein. Durch diesen Vorgang wird das Bezahlterminal an den Betreiber gebunden.

Das Bezahlterminal überprüft die Signatur der Applikation mit dem öffentlichen Schlüssel aus dem Zertifikat der Vorrichtung zum Signieren von Applikationen. Im vorliegenden Beispiel ist diese Prüfung erfolgreich. Das Bezahlterminal installiert die Applikation.

Der Betreiber erzeugt in einer sicheren Vorrichtung zur Einbringung kryptographischer Schlüssel ein Schlüsselpaar und exportiert den öffentlichen Schlüssel.

Der Betreiber beantragt beim Terminalhersteller die Austellung eines Zertifikats mit folgenden Attributen:
- als Subjekt: Identifizierungsdaten des Betreibers;
- als Berechtigung: "Schlüssel einbringen";
- das zugeteilte Betreibermerkmal;
- der besagte öffentliche Schlüssel der Vorrichtung zur Einbringung kryptographischer Schlüssel.

Der Terminalhersteller überprüft anhand des zentralen Registers, ob dem Betreiber das Betreibermerkmal aus dem Zertifikatsantrag zugeordnet ist. Im vorliegenden Beispiel ist dies der Fall.

In seiner Rolle als Zertifizierungsstelle für Vorrichtungen zur Einbringung kryptographischer Schlüssel stellt der Terminalhersteller das beantrage Zertifikat mit folgenden Attributen aus:
- als Herausgeber: Identifizierungsdaten der Zertifizierungsstelle;
- als Subjekt: Identifizierungsdaten des Betreibers;
- als Berechtigung: "Schlüssel einbringen";
- das Betreibermerkmal des Betreibers;
- der öffentliche Schlüssel der Vorrichtung zum Einbringen von kryptographischen Schlüsseln;
- eine Signatur über die genannten Attribute, die mittels des privaten Schlüssels der Zertifizierungsstelle erstellt wurde.

Das ausgestellte Zertifikat sowie das Zertifikat der Zertifizierungsstelle für Vorrichtungen zur Einbringung kryptographischer Schlüssel werden vom Terminalhersteller an den Betreiber übergeben.

Der Betreiber importiert die beiden Zertifikate in die Vorrichtung zur Einbringung kryptographischer Schlüssel.

Der Betreiber signiert einen Schlüsselblock, der zur vertraulichen Kommunikation zwischen Betreiber und Bezahlterminal auf diesem installiert werden soll mit der Vorrichtung zur Einbringung kryptographischer Schlüssel.

Der Betreiber überträgt die folgenden Dateien auf das Bezahlterminal:
- das Zertifikat der Zertifizierungsstelle für Vorrichtungen zur Einbringung von kryptographischen Schlüsseln;
- das Zertifikat der Vorrichtung zur Einbringung von kryptographischen Schlüsseln;
- der signierte Schlüsselblock.

Das Bezahlterminal startet den Prozess zum Einbringen von kryptographischen Schlüsseln. Zunächst prüft es die Signatur des Zertifikats der Zertifizierungsstelle mit dem öffentlichen Schlüssel des Vertrauensankers, der integritätsgeschützt im Bezahlterminal vorliegt. Im vorliegenden Beispiel ist diese Prüfung erfolgreich.

Das Bezahlterminal prüft die Signatur des Zertifikats der Vorrichtung zur Einbringung von kryptographischen Schlüsseln mit dem öffentlichen Schlüssel aus dem Zertifikat der Zertifizierungsstelle. Im vorliegenden Beispiel ist diese Prüfung erfolgreich.

Das Bezahlterminal prüft, ob das Zertifikat der Vorrichtung zur Einbringung von kryptographischen Schlüsseln die Berechtigung "Schlüssel einbringen" aufweist. Im vorliegenden Beispiel ist diese Prüfung erfolgreich.

Das Bezahlterminal prüft, ob es bereits an einen Betreiber gebunden ist. Das heißt, ob bereits ein Betreibermerkmal eingebracht wurde. An diesem Punkt des Beispiels ist dies der Fall.

Das Bezahlterminal extrahiert das Betreibermerkmal aus dem Zertifikat der Vorrichtung zur Einbringung kryptographischer Schlüssel. Es überprüft, ob das Betreibermerkmal mit dem bereits eingebrachten Betreibermerkmal übereinstimmt. Im vorliegenden Beispiel ist dies der Fall.

Das Bezahlterminal überprüft die Signatur des Schlüsselblocks mit dem öffentlichen Schlüssel aus dem Zertifikat der Vorrichtung zur Einbringung von kryptographischen Schlüsseln. Im vorliegenden Beispiel ist diese Prüfung erfolgreich. Das Bezahlterminal importiert den kryptographischen Schlüssel. Das Bezahlterminal ist somit in Betrieb genommen.

## Patentansprüche

1. Verfahren zur Konfiguration oder Änderung einer Konfiguration eines Bezahlterminals, wobei die Konfiguration oder Änderung einer Konfiguration durch wenigstens einen Betreiber durchgeführt wird,
**dadurch gekennzeichnet, dass** ein Identifikationsmerkmal zur Identifikation des wenigstens einen Betreibers nach der Herstellung und bis zur ersten Inbetriebnahme in das Bezahlterminal eingebracht wird, dass dieses Identifikationsmerkmal zur Autorisierung des wenigstens einen Betreibers verwendet wird, dass eine Autorisierung des wenigstens einen Betreibers durch das Bezahlterminal festgestellt wird, und dass nach erfolgreicher Autorisierung des wenigstens einen Betreibers der wenigstens eine Betreiber die Konfiguration oder Änderung der Konfiguration durchführt.

2. Verfahren nach Anspruch 1, **dadurch gekennzeichnet, dass** der Betreiber ein von einem Hersteller des Bezahlterminals uninitialisiertes Bezahlterminal initialisiert.

3. Verfahren nach einem der vorhergehenden Ansprüche, **dadurch gekennzeichnet, dass** das Identifikationsmerkmal von dem Betreiber eingebracht wird.

4. Verfahren zur Zuordnung eines Bezahlterminals zu einem Betreiber,
**dadurch gekennzeichnet, dass** das Bezahlterminal die Integrität eines Identifikationsmerkmales des Betreibers zur Identifikation des Betreibers, dem das Bezahlterminal zugeordnet ist, überprüft, dass das Bezahlterminal eine Änderung einer konfigurierbaren Eigenschaft lediglich durch den Betreiber zulässt, dem das Bezahlterminal zugeordnet ist.

5. Verfahren nach Anspruch 4, **dadurch gekennzeichnet, dass** das Bezahlterminal kryptographisch nachweist, welchem Betreiber das Bezahlterminal zugeordnet ist.

6. Verfahren nach Anspruch 5, **dadurch gekennzeichnet, dass** als Identifikationsmerkmal ein Datenelement verwendet wird, welches im Bezahlterminal gespeichert ist.

7. Verfahren nach einem der vorhergehenden Ansprüche, **dadurch gekennzeichnet, dass** jeder Betreiber bei den ihm zugeordneten Bezahlterminal ein anderes Datenelement verwendet.

8. Verfahren nach einem der vorhergehenden Ansprüche, **dadurch gekennzeichnet, dass** bei der Konfiguration eine Bezahlapplikation konfiguriert wird.

9. Verfahren nach Anspruch 8, **dadurch gekennzeichnet, dass** die Bezahlapplikation in Form eines ausführbaren Programmcodes in das Bezahlterminal eingebracht wird.

10. Verfahren nach einem der vorhergehenden Ansprüche, **dadurch gekennzeichnet, dass** die Bezahlapplikation mit einem geheimen Schlüssel signiert wird.

11. Verfahren nach einem der vorhergehenden Ansprüche, **dadurch gekennzeichnet, dass** ein öffentlicher Schlüssel dem Bezahlterminal bekannt ist und dass mit diesem öffentlichen Schlüssel ein Recht eingeräumt ist, Applikationen in das Bezahlterminal einzubringen, und dass das Bezahlterminal vor dem Einbringen der Applikation eine Prüfung der Autorisierung durchführt und/oder dass eine Manipulation der Applikation durch das Bezahlterminal geprüft wird.

12. Verfahren nach einem der vorhergehenden Ansprüche, **dadurch gekennzeichnet, dass** bei der Konfiguration kryptographische Schlüssel konfiguriert werden.

13. Verfahren nach einem der vorhergehenden Ansprüche, **dadurch gekennzeichnet, dass** kryptographische Schlüssel von einer zentralen Stelle in das Bezahlterminal eingebracht werden.

14. Verfahren nach Anspruch 13, **dadurch gekennzeichnet, dass** die kryptographischen Schlüssel in einer sicheren Umgebung in das Bezahlterminal eingebracht werden oder dass bei der Übertragung die kryptographischen Schlüssel durch kryptographische Verfahren geschützt werden.

15. Verfahren nach einem der vorhergehenden Ansprüche, **dadurch gekennzeichnet, dass** bei einer symmetrischen Kryptographie zur Übertragung kryptographischer Schlüssel von dem Betreiber ein betreiberspezifischer Master-Schlüssel generiert wird, dass der Master-Schlüssel gespeichert wird, dass von dem Master-Schlüssel ein gerätespezifischer Schlüssel mittels einer eindeutigen Kennung des Bezahlterminals für das Bezahlterminal abgeleitet wird, und dass der abgeleitete gerätespezifische Schlüssel in das Bezahlterminal eingebracht wird.

16. Verfahren nach einem der vorhergehenden Ansprüche, **dadurch gekennzeichnet, dass** eine Vorrichtung, welche die kryptographischen Schlüssel eines Betreibers verteilt, den gerätespezifischen Schlüssel für das Bezahlterminal ableitet und die kryptographischen Schlüssel mittels dieses gerätespezifischen Schlüssels chiffriert, dass die chiffrierten kryptographischen Schlüssel in das Bezahlterminal eingebracht werden, dass anschließend die kryptographischen Schlüssel von dem Bezahlterminal dechiffriert werden mit dem gerätespezifischen Schlüssel.

17. Verfahren nach einem der Ansprüche 1 bis 14,
**dadurch gekennzeichnet, dass** bei einer asymmetrischen Kryptographie zur Übertragung kryptographischer Schlüssel in der Vorrichtung, die die Schlüssel des Betreibers verteilt, Schlüsselpaare vorhanden sind und ein entsprechendes Zertifikat, das den öffentlichen Schlüssel enthält, dass das Zertifikat in ein Bezahlterminal eingebracht wird, so dass das Bezahlterminal lediglich kryptographische Schlüssel annimmt, die durch diese Vorrichtung des Betreibers autorisiert sind, dass anschließend die Vorrichtung des Betreibers kryptographische Schlüssel in das Bezahlterminal einbringt, wobei die kryptographischen Schlüssel mit dem öffentlichen Schlüssel des Bezahlterminals chiffriert und mit dem geheimen Schlüssel eines Schlüsselpaares signiert sind, dass die kryptographischen Schlüssel nach dem Einbringen in das Bezahlterminal von dem Bezahlterminal dechiffriert werden, das den entsprechenden geheimen Schlüssel besitzt, und dass eine Autorisierungsprüfung mittels des öffentlichen Schlüssels durchgeführt wird, den die Vorrichtung des Betreibers im ersten Schritt über das entsprechende Zertifikat eingebracht hat.

18. Verfahren nach einem der vorhergehenden Ansprüche, **dadurch gekennzeichnet, dass** bei der Konfiguration Laufzeitparameter konfiguriert werden.

19. Verfahren nach Anspruch 18, **dadurch gekennzeichnet, dass** Änderungen der Laufzeitparameter zur Konfiguration des Bezahlterminals lediglich nach erfolgreicher Autorisierung durch ein Terminal Management System erfolgen.

20. Verfahren nach einem der vorhergehenden Ansprüche, **dadurch gekennzeichnet, dass** ein Terminal Management System über eine direkte Kommunikationsverbindung mit dem Bezahlterminal kommuniziert und dass das Terminal Management System eine verschlüsselte Kommunikationsverbindung mit den Bezahlterminals aufbaut, und dass sich das Terminal Management System mittels eines asymmetrischen Schlüsselpaares und eines entsprechenden Zertifikates gegenüber dem Bezahlterminal authentifiziert, und dass das Bezahlterminal eine Autorisierungsprüfung durchführt, und dass nach positiver Überprüfung eine Änderung von Laufzeitparametern durchgeführt wird.

21. Verfahren nach einem der Ansprüche 1 bis 19,
**dadurch gekennzeichnet, dass** ein Terminal Management System ohne eine direkte Kommunikationsverbindung mit dem Bezahlterminal kommuniziert und dass Änderungen von Laufzeitparametern mit signierten Datenpaketen und einer anschließenden Autorisierungsprüfung durchgeführt werden.

22. Verfahren nach einem der vorhergehenden Ansprüche, **dadurch gekennzeichnet, dass** zur Freischaltung von optionalen Funktionen des Bezahlterminals der Betreiber eine Lizenz zum Freischalten bei dem Hersteller anfordert, dass die Lizenz zum Freischalten erteilt wird, und dass der Betreiber die Funktion an wenigstens einem Bezahlterminal freischaltet.

23. Verfahren nach Anspruch 22, **dadurch gekennzeichnet, dass** die Freischaltung in Form von Lizenzschlüsseln erfolgt.

24. Verfahren nach einem der vorhergehenden Ansprüche, **dadurch gekennzeichnet, dass** bei der Konfiguration eine Hardwaretopologie konfiguriert wird.

25. Verfahren nach einem der vorhergehenden Ansprüche, **dadurch gekennzeichnet, dass** zusätzliche Hardware mittels signierter Datenpakete aktiviert oder deaktiviert werden.

26. Verfahren nach einem der der vorhergehenden Ansprüche, **dadurch gekennzeichnet, dass** zum Nachweis einer Betreiberzuordnung eines Bezahlterminals eine Zufallszahl erzeugt und an das Bezahlterminal übermittelt wird und dass das Bezahlterminal ein Tuppel aus Zufallszahl und Betreibermerkmal bildet und dieses mit dem privaten Schlüssel signiert, dass das Bezahlterminal mit dem Betreibermerkmal der Signatur und dem Zertifikat antwortet, dass anschließend das Zertifikat geprüft wird, dass anschließend das Tuppel aus Zufallszahl und Betreibermerkmal gebildet wird und die Signatur dieses Tuppels mit dem öffentlichen Schlüssel aus dem Zertifikat prüft.
